(19) Europäisches Patentamt / European Patent Office / Office européen des brevets

(11) **EP 4 332 914 A1**

(12) **DEMANDE DE BREVET EUROPEEN**

(43) Date de publication:
06.03.2024 Bulletin 2024/10

(21) Numéro de dépôt: 23182253.7

(22) Date de dépôt: 29.06.2023

(51) Classification Internationale des Brevets (IPC):
*G06V 20/58* (2022.01)   *G06V 10/82* (2022.01)
*G06N 3/04* (2023.01)   *B60W 60/00* (2020.01)
*G06N 3/045* (2023.01)   *G06N 3/08* (2023.01)

(52) Classification Coopérative des Brevets (CPC):
**G06V 10/82; B60W 60/00; G06N 3/04;**
**G06N 3/045; G06N 3/08; G06V 20/58;**
G06V 2201/08

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **02.09.2022 FR 2208833**

(71) Demandeur: **Commissariat à l'énergie atomique et aux énergies alternatives**
**75015 Paris (FR)**

(72) Inventeurs:
• **DEFAUW, Nils**
**38054 GRENOBLE Cedex 09 (FR)**
• **MALFANTE, Marielle**
**38054 GRENOBLE Cedex 09 (FR)**
• **RAKOTOVAO ANDRIAMAHEFA, Tiana**
**38054 GRENOBLE Cedex 09 (FR)**
• **ANTONI, Olivier**
**38054 GRENOBLE Cedex 09 (FR)**
• **LESECQ, Suzanne**
**38054 GRENOBLE Cedex 09 (FR)**

(74) Mandataire: **Atout PI Laplace**
**Immeuble "Visium"**
**22, avenue Aristide Briand**
**94117 Arcueil Cedex (FR)**

(54) **PROCEDE ET DISPOSITIF DE DETECTION D'OBJETS MATERIELS DANS UN ESPACE ENVIRONNANT UN ROBOT AUTONOME**

(57)    La présente invention concerne un procédé et un dispositif associé pour la détection d'objets matériels dans un espace environnant un robot autonome. En particulier, l'invention adresse un procédé pour détecter la présence de véhicules dans l'environnement d'un véhicule autonome, qui est basé sur l'analyse de grilles d'occupation afin de restituer dans une représentation visuelle en vue de dessus de l'environnement du véhicule autonome, des boites englobantes orientées autour des véhicules détectés.

FIG. 2

## Description

## Domaine de l'invention

L'invention concerne le domaine technique de la détection d'objets, et porte plus particulièrement sur un procédé et un dispositif de détection d'objets matériels dans un espace environnant un robot autonome.

## Etat de la technique

La détection d'objets matériels dans un espace environnant un robot autonome consiste généralement en l'interprétation de données fournies par différents capteurs situés sur le robot autonome dans le but de produire une modélisation de l'environnement immédiat du véhicule. Pour les applications aux véhicules, la modélisation de l'environnement relève du domaine de la perception pour la voiture autonome.

L'automatisation de la conduite dans le cadre du véhicule autonome est un défi de recherche majeur de notre temps. Un tel système doit conjuguer d'une part une très haute précision car une erreur peut mener à des accidents graves et d'autre part le système doit être en mesure de s'exécuter en temps réel sur des calculateurs embarqués à puissance de calcul limitée. Aussi, la détection d'autres véhicules présents dans l'environnement d'un véhicule autonome revêt une importance particulière.

Pour permettre une localisation précise des obstacles, un véhicule autonome est équipé de capteurs de distance (« range sensors » selon l'anglicisme consacré) tels que des 'LiDARs' (acronyme de « Light Détection And Ranging »), des radars, des sonars ou encore des caméras stéréoscopiques. Ces capteurs ont pour particularité leur capacité à positionner les obstacles dans l'espace via la mesure de leur distance et de leur position angulaire par rapport à celle du capteur.

Chacun de ces types de capteur a ses propres avantages et ses propres limites, les caméras stéréoscopiques par exemple ne fonctionnent que de jour tandis que les LiDARs voient leur acuité dégradée en cas de pluie. Pour permettre une fiabilité maximale en toute circonstance, ces capteurs sont généralement utilisés en association sur les véhicules autonomes. Un procédé de fusion de données permet alors d'assembler les mesures provenant des différents capteurs et de produire un modèle unifié de l'environnement autour du véhicule.

Différentes approches pour modéliser l'environnement d'un véhicule sont proposées dans les articles suivants :

(1) H. Moravec and A. Elfes. "High résolution maps from wide angle sonar". In 1985 IEEE International Conférence on Robotics and Automation Proceedings, volume 2, pages 116-121, Mar 1985.

(2) Sascha Wirges, Tom Fischer, Christoph Stiller, and Jesus Balado Frias. "Object détection and classification in occupancy grid maps using deep convolutional networks". In 2018 21st International Conférence on Intelligent Transportation Systems (ITSC), pages 3530-3535. ISSN : 2153-0017.

(3) Martin Simon, Stefan Milz, Karl Amende, and Horst-Michael Gross. Complex-YOLO: "An euler-region-proposal for real-time 3d object détection on point clouds". In Laura Leal-Taixé and Stefan Roth, editors, Computer Vision - ECCV 2018 Workshops, Lecture Notes in Computer Science, pages 197-209. Springer International Publishing.

(4) Stefan Hoermann, Philipp Henzler, Martin Bach, and Klaus Dietmayer. "Object détection on dynamic occupancy grid maps using deep learning and automatic label génération". In 2018 IEEE Intelligent Vehicles Symposium (IV), pages 826-833. ISSN: 1931-0587.

L'article (1) de Moravec et al. propose un modèle d'environnement basé sur des grilles d'occupation qui permet de fusionner les mesures de différents capteurs et de prendre en compte leurs bruits et incertitudes via l'usage d'un mécanisme probabiliste.

L'article (2) de Wirges et al. présente un modèle de détection de véhicules, piétons et vélos sur une grille en vue de dessus créée à partir de données issues de capteurs de type LiDAR et contenant des données spécifiques aux LiDARs telles que l'intensité et la hauteur des points. Les architectures de détection utilisées sont dites de type "two-stage" avec deux réseaux de neurones et s'exécutent en 100ms par grille.

L'article (3) de Simon et al. présente un modèle de détection de véhicules, piétons et vélos sur une grille en vue de dessus produite à partir de données LiDAR très similaire à celui de l'article (2). Les grilles sont aussi LiDAR-spécifiques car elles contiennent de l'information qui n'est produite que par un capteur LiDAR telle que l'intensité des points. La sortie prédit des classes pour des objets "véhicules", des objets "piétons" et des objets "vélos". L'architecture du réseau de neurones est inspirée de celle du réseau de neurones connu YOLOv2 qui est une architecture dite de type "single-stage" en un seul réseau de neurones.

L'article (4) de Hoermann et al. présente un modèle de détection d'objets sur des grilles d'occupation dynamiques (DOGMa). Les grilles d'occupation dynamiques allient les probabilités d'occupation des grilles statiques avec des vecteur-vitesse quantifiant le mouvement de chaque cellule de la grille. L'architecture du réseau de neurones est de type "single-stage" ou monoétape. Des boîtes englobantes sont produites et correspondent à tous les objets dynamiques présents dans la scène. Or ils ne sont pas classifiés, et donc il n'est pas possible de différencier une voiture d'un vélo ou d'un piéton. Il s'agit plus d'une méthode de classification (« clustering » selon l'anglicisme consacré) de cellules dynamiques avec un vecteur-vitesse non nul, à l'aide d'un modèle d'apprentissage profond.

La présente invention propose une alternative aux approches connues de détection de véhicules présents dans l'environnement immédiat d'un véhicule équipé de capteurs de distance.

**Description brève de l'invention**

L'invention vise un procédé (et un dispositif) pour détecter d'autres véhicules présents dans l'environnement d'un véhicule, qui est basé sur l'analyse de grilles d'occupation, et qui restitue dans une représentation visuelle en vue de dessus de l'environnement des boites englobantes orientées autour des véhicules détectés.

Plus généralement, l'invention a pour objet un procédé de détection d'objets matériels prédéfinis dans un espace environnant un robot autonome.

De manière avantageuse, le procédé de l'invention utilise des grilles d'occupation statiques comme données d'entrée pour l'analyse, les grilles d'occupation contenant des probabilités d'occupation qui peuvent être générées à partir d'un capteur de distance quelconque à l'aide d'un modèle de capteur adapté.

Avantageusement, l'architecture du circuit d'analyse et de traitement des données d'entrée est de type réseau de neurones mono-étape ("single-stage").

Avantageusement, l'architecture du circuit d'analyse et de traitement de données de l'invention nécessite moins de puissance de calcul et est plus rapide que les solutions connues.

L'architecture mono-étape du réseau de neurones convolutif telle que proposée dans différentes variantes de réalisation, est peu coûteuse en ressources matérielles (i.e. en ressources computationnelles et en utilisation mémoire), ce qui permet son exécution dans des unités de calcul embarquées à bord d'un véhicule ou d'un robot autonome.

Dans une réalisation opérationnelle, le procédé de l'invention s'exécute en 10 millisecondes (ms) par grille d'occupation.

Avantageusement, le procédé de détection de l'invention permet de générer une représentation visuelle en vue de dessus de l'environnement d'un véhicule où tout véhicule détecté autour du véhicule est signalé par une boite englobante, les boites englobantes étant orientées, un angle d'orientation étant calculé pour chaque véhicule détecté et restitué par l'orientation de la boite englobante correspondante.

A cet effet, dans un mode de réalisation, le procédé de détection d'objets matériels dans un espace environnant un robot autonome de l'invention comprend les étapes suivantes :

- recevoir des données relatives à l'environnement dudit robot autonome, lesdites données étant représentatives de probabilités d'occupation de chaque cellule d'au moins une grille d'occupation, une grille d'occupation fournissant une représentation spatiale discrétisée de l'environnement autour dudit robot autonome ;

- exécuter un algorithme d'intelligence artificielle sur les données reçues pour générer une matrice de sortie dont chaque cellule contient un score de confiance et des paramètres définissant une boite englobante orientée, ledit algorithme d'intelligence artificielle mettant en oeuvre un réseau de neurones convolutif de type mono-étape, entrainé lors d'une phase d'apprentissage supervisé pour produire, à partir de données de grille d'occupation, un score de confiance indiquant la probabilité qu'une région contienne un objet prédéfini ainsi que des coordonnées d'une boîte englobante pour ledit objet prédéfini ; et

- extraire parmi les cellules de la matrice de sortie, les cellules dont le score de confiance est supérieur à un seuil prédéfini.

Dans un mode de réalisation, l'étape de réception de données d'environnement comprend une étape consistant à recevoir des données issues d'au moins un capteur de distance embarqué sur ledit robot autonome, et une étape consistant à transformer les données capteur en données représentatives de probabilités d'occupation d'une grille d'occupation.

Dans un autre mode de réalisation, le procédé comprend de plus avant l'étape de transformation, une étape consistant à fusionner les données reçues de plusieurs capteurs de distance embarqués.

Dans une variante de réalisation, l'étape de détermination des régions comprenant un objet matériel prédéfini, comprend de plus une étape consistant à calculer un angle d'orientation pour la boite englobante orientée.

Avantageusement, le procédé peut comprendre une étape consistant à déterminer qu'un même objet matériel prédéfini est détecté plusieurs fois, et une étape consistant à ne conserver qu'une seule occurrence de détection.

Un autre objet de l'invention concerne un dispositif de détection d'objets matériels dans un espace environnant un robot autonome, comprenant des moyens pour mettre en oeuvre les étapes du procédé de l'invention.

Dans un mode de réalisation, les moyens pour exécuter un algorithme d'intelligence artificielle comprennent des moyens pour mettre en oeuvre un réseau de neurones composé d'une alternance de couches convolutionnelles pour l'extraction de caractéristiques et de couches de sous-échantillonnage, ledit réseau de neurones comprenant de plus deux filtres de sortie sur la dernière couche convolutionnelle configurés pour produire un angle d'orientation des boites englobantes.

Dans une réalisation du dispositif de l'invention, le réseau de neurones est basé sur une architecture YOLOv2 ou YOLOv3.

Dans une implémentation particulière, la grille d'occupation d'entrée du réseau de neurones est une matrice de taille 256 × 256 et le réseau de neurones est configuré pour produire une matrice de sortie de taille 8 × 8 ou une matrice de sortie de taille 16 × 16.

Avantageusement, chaque cellule de la matrice de sortie contient un n-uplet composé d'éléments représentatifs d'un score de confiance et de caractéristiques d'une boite englobante, dont des éléments permettant de calculer l'orientation de ladite boite englobante.

Dans une autre réalisation du dispositif de l'invention, les moyens pour exécuter un algorithme d'intelligence artificielle comprennent des moyens pour mettre en oeuvre un réseau de neurones basé sur une architecture PIXOR.

Dans une implémentation particulière, la grille d'occupation fournie en entrée du réseau de neurones est une matrice de taille 256 × 256 et la matrice de sortie est une matrice de taille 64 × 64 dont chaque cellule contient un n-uplet composé d'éléments représentatifs d'un score de confiance et de caractéristiques d'une boite englobante orientée.

Avantageusement, le dispositif de l'invention comprend une interface homme-machine pour afficher une représentation de la matrice de sortie obtenue selon le procédé de l'invention.

L'invention porte aussi sur un véhicule autonome embarquant un système d'assistance à la conduite, ledit système comprenant un dispositif pour la détection d'autres véhicules qui lui-même comprend des moyens pour mettre en oeuvre les étapes du procédé de détection de véhicules selon l'invention.

Avantageusement, un objet de l'invention porte sur un procédé de création d'une base de données d'apprentissage pour entrainer un réseau de neurones artificiels, le procédé comprenant au moins des étapes consistant à :

- recevoir sous la forme d'un nuage de points 3D, des données représentatives d'un environnement autour d'un robot autonome ;
- annoter le nuage de points 3D pour identifier des objets matériels prédéfinis ;
- générer une représentation spatiale discrétisée 2D du nuage de points 3D annoté, ladite représentation spatiale discrétisée 2D étant une matrice dont les cellules contiennent des probabilités d'occupation ; et
- stocker ladite représentation spatiale discrétisée 2D comme une donnée d'apprentissage.

Avantageusement, le procédé de l'invention comprend une étape préliminaire consistant à créer une base de données d'apprentissage selon le procédé de création d'une base de données d'apprentissage pour entrainer un réseau de neurones artificiels proposé.

L'invention peut être appliquée à tout type de robots, par exemple des robots terrestres (voitures autonomes), des robots aériens (drones), des robots sous-marins, etc.

L'invention adresse aussi un programme d'ordinateur comprenant des instructions de code qui, lorsque le programme est exécuté par un ordinateur, conduisent celui-ci à mettre en oeuvre le procédé de détection d'objets matériels de l'invention.

## Brève description des figures

D'autres caractéristiques, détails et avantages de l'invention ressortiront à la lecture de la description faite en référence aux dessins annexés donnés à titre d'exemple et qui représente :

La figure 1 illustre une représentation discrétisée sous forme d'une grille d'occupation, de l'environnement d'un véhicule autonome en vue de dessus.

La figure 2 est un organigramme des étapes du procédé de l'invention de détection d'objet matériel selon un mode de réalisation.

La figure 3 illustre un premier mode de réalisation du dispositif de détection d'objet matériel selon l'invention.

La figure 4 illustre un deuxième mode de réalisation du dispositif de détection d'objet matériel selon l'invention.

Les figures 5a et 5b illustrent un troisième mode de réalisation du dispositif de détection d'objet matériel selon l'invention.

## Description détaillée de l'invention

Il est d'abord fait un rappel sur les grilles d'occupation.

Une grille d'occupation est un modèle informatique d'environnement couramment utilisé en robotique et en conduite autonome, introduit dans l'article (1) précité.

Une grille d'occupation est une matrice de probabilités où chaque cellule de la matrice correspond à une portion de l'espace environnant un robot autonome et contient une probabilité d'occupation de cette portion d'espace.

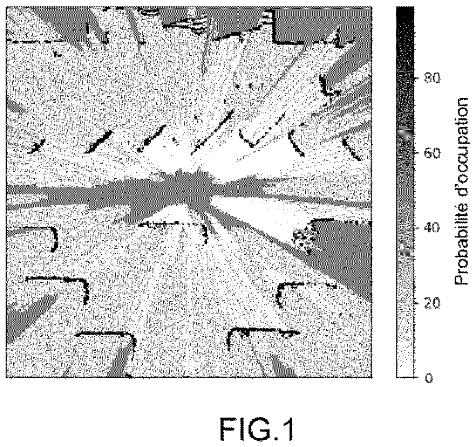

Une cellule d'une grille d'occupation est généralement définie en deux dimensions (2D), l'espace étant par exemple délimité par un carré de 10 cm × 10 cm. Une cellule est caractérisée par une valeur comprise entre 0 et 1, représentant la probabilité que la cellule soit occupée. La figure 1 est une représentation discrétisée de l'environnement en vue de dessus d'un véhicule autonome (ou « Bird's Eye View » selon l'anglicisme consacré), sous forme d'une grille d'occupation où les probabilités d'occupation sont représentées en différents niveaux de gris. Par exemple, une probabilité de 0 (représentée par un niveau de blanc) signifie que la cellule est vide à coup sûr, alors qu'une probabilité de 1 (représentée par un niveau de noir) signifie que la cellule contient à coup sûr un objet. Toutes les valeurs intermédiaires (différents niveaux de gris) quantifient l'incertitude sur l'état d'occupation de la cellule.

La collection de toutes les cellules, généralement des millions de cellules, forme une grille d'occupation.

Le calcul des probabilités d'une grille d'occupation est généralement effectué à l'aide d'architectures parallèles telles que les GPU (acronyme de l'expression anglaise « Graphic Processing Unit »). Il a été récemment démontré que les grilles d'occupation peuvent être calculées et fusionnées en utilisant uniquement l'arithmétique des nombres entiers sur des microcontrôleurs à faible puissance, ce qui en fait un modèle d'environnement important pour la perception en temps réel à faible puissance.

Selon l'art antérieur évoqué, une grille d'occupation représentative de l'environnement d'un robot autonome est calculée à partir des données constituant la ou les images de l'environnement fournies par un ou plusieurs capteurs équipant le robot (par exemple des nuages de points pour un LiDAR), après le cas échéant fusion des données des capteurs.

La fusion des mesures des capteurs dans une grille d'occupation se fait en deux étapes. Dans une première étape, une grille d'occupation est construite pour chaque capteur en utilisant un modèle de bruit de mesure adapté. Dans une seconde étape, toutes les grilles d'occupation sont fusionnées en une grille unique à l'aide d'un processus de fusion Bayésienne. Lors de la fusion de deux cellules, la probabilité d'occupation de la cellule résultante est plus certaine (plus proche de 0 ou de 1) si les deux cellules fusionnées ont respectivement une probabilité d'occupation en accord quant à l'état d'occupation de la cellule. Dans le cas contraire, la probabilité d'occupation résultante est moins certaine (plus proche de 0,5). Ce processus synthétise les informations provenant des différents capteurs dans une représentation compacte. Les grilles d'occupation sont donc un modèle important pour la représentation de l'environnement en temps réel, qui est multimodal et prend en compte le bruit inhérent aux différents capteurs.

La présente invention utilise des grilles d'occupation comme données d'entrée d'un dispositif de détection d'objets matériels dans l'environnement d'un robot autonome.

Les architectures proposées produisent des résultats de détection précis avec un temps de prédiction permettant une exécution en temps réel.

Dans le contexte de la conduite autonome où la détection en temps-réel de véhicules présents dans l'environnement d'un véhicule autonome est primordiale, les détecteurs proposés (i.e. le dispositif de l'invention dans différentes variantes d'implémentation) permettent une détection précise des véhicules, via la prédiction de leur position, de leur dimension et de leur orientation.

La détection en temps-réel du procédé de l'invention s'entend comme étant du temps-réel par rapport à la fréquence de production des données au niveau des capteurs de distance équipant le véhicule autonome.

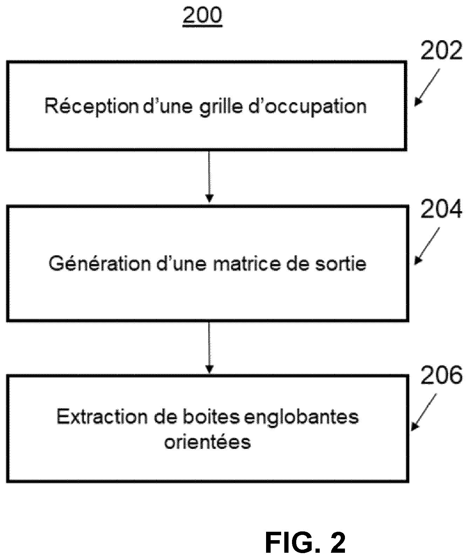

La figure 2 est un organigramme des étapes en inférence du procédé 200 de l'invention mis en oeuvre par ordinateur, qui permet la détection d'objet matériel dans l'environnement d'un robot autonome, selon un mode de réalisation.

Une première étape 202 du procédé consiste à recevoir des données relatives à l'environnement du robot autonome (tel qu'un véhicule autonome) sous la forme d'une grille d'occupation. Les données sont ainsi des valeurs représentatives de probabilités d'occupation pour chaque cellule de la grille d'occupation.

Dans un mode de réalisation, les données d'environnement reçues sont générées à partir de données issues d'au moins un capteur de distance embarqué sur ledit robot autonome, et le procédé peut comprendre une étape préliminaire consistant à transformer les données capteur en données représentatives de probabilités d'occupation pour une grille d'occupation.

Dans un mode de réalisation où le robot autonome (i.e. le véhicule autonome) embarque plusieurs capteurs de distance, le procédé permet, avant l'étape de transformation des données capteur en données représentatives de probabilités d'occupation d'une grille d'occupation, de fusionner les données reçues des différents capteurs. Le processus de fusion peut être un processus de type Bayésien et prendre en compte les bruits des capteurs et les incertitudes.

Après réception des données de la grille d'occupation représentative de l'environnement du robot autonome, le procédé dans une étape ultérieure 204, permet de traiter les données reçues (éventuellement après fusion) par l'exécution d'un algorithme d'intelligence artificielle.

Le réseau de neurones correspondant mis en oeuvre a été entrainé lors d'une phase d'apprentissage supervisé, afin de déterminer à partir de données d'une grille d'occupation, des régions qui contiennent un objet matériel prédéfini ainsi que les coordonnées des boîtes englobantes de cet objet dans les régions où celui-ci est présent.

Dans le contexte de la conduite autonome, l'objet matériel prédéfini à détecter est un véhicule qui a une position, des dimensions, une orientation, un avant et un arrière.

Dans un mode de réalisation, le traitement des données de la grille d'occupation se fait par la mise en oeuvre d'un réseau de neurones convolutif entrainé de type mono-étape (ou « single-stage » en anglais).

Dans le contexte de la conduite autonome, l'apprentissage du réseau de neurones est fait pour permettre au réseau de neurones, à partir d'une grille d'occupation donnée en entrée, de déterminer les régions qui contiennent un véhicule, ainsi que la position, les dimensions et l'orientation de chaque véhicule.

Avantageusement, l'architecture du circuit de traitement des données de la grille d'occupation, est de type réseau de neurones mono-étape, n'utilisant qu'un réseau neuronal unique, et étant exécuté une seule fois par grille d'occupation. Cette architecture permet des utilisations en temps réels.

La précision en inférence d'un réseau de neurones dépend de manière directe de l'apprentissage à partir duquel il a été entrainé. Un apprentissage supervisé efficace repose sur la quantité, la variété, et la qualité des jeux de données d'entrées qui sont soumis au réseau de neurones pour qu'il apprenne. Dans le cadre de l'invention, où le réseau de neurones doit analyser les données d'une grille d'occupation (i.e. des probabilités d'occupation par cellule), les inventeurs ont dû constituer une nouvelle base de données d'apprentissage contenant des jeux de données de type grille d'occupation, pour entrainer différents réseaux de neurones.

Des données d'apprentissage ont en particulier été générées à partir de nuages de points issus de capteurs LiDAR embarqués sur des véhicules autonomes, et qui ont été annotés pour indiquer la position, les dimensions ainsi que l'orientation des véhicules présents dans l'environnement d'un véhicule autonome. Les nuages de points annotés ont ensuite été transformés, selon un processus Bayésien, en grilles d'occupation 2D exploitables par les réseaux de neurones.

Les annotations qui consistent en des boîtes englobantes 3D des véhicules, sont aplaties pour être transformées en boîtes englobantes 2D exprimées dans le même repaire que les grilles d'occupation 2D. Ces annotations sont ensuite utilisées en tant que vérités terrain durant la phase d'apprentissage.

L'étape 204 permet ainsi de générer une matrice de sortie dont chaque cellule correspond à une portion de l'espace environnant le véhicule autonome et qui contient un score de confiance permettant de quantifier la probabilité de la présence de l'objet matériel prédéfini ainsi que les coordonnées d'une boite englobante orientée qui délimite les contours de l'objet matériel.

Dans une étape suivante 206, le procédé permet d'extraire parmi les cellules de la matrice de sortie, les cellules dont le score de confiance est supérieur à un seuil prédéfini. Le choix de ce seuil dépend de l'application visée. Abaisser le seuil permet d'obtenir plus de boîtes englobantes au risque que certaines d'entre elles ne correspondent pas à l'objet matériel prédéfini.

Avantageusement, les objets matériels prédéfinis étant des objets ayant une orientation, la boite englobante prédite est orientée. Le procédé de l'invention permet lors de l'exécution de l'algorithme d'intelligence artificielle, de produire directement ou de déduire un angle d'orientation θ pour la boite englobante prédite.

Dans une variante de réalisation, le procédé permet de déterminer qu'un même objet matériel prédéfini est détecté plusieurs fois (doublons), et permet de ne conserver qu'une seule occurrence de détection.

Dans un mode de réalisation, pour supprimer un doublon, le procédé met en oeuvre une étape dite de « Non-Maximum Suppression » (NMS) qui est un algorithme de post-traitement, connu de l'homme du métier, qui est chargé de fusionner toutes les détections qui appartiennent à un même objet.

Avantageusement, l'implémentation du dispositif pour exécuter le procédé de l'invention peut se baser sur différentes architectures pour le réseau de neurones convolutif mono-étape.

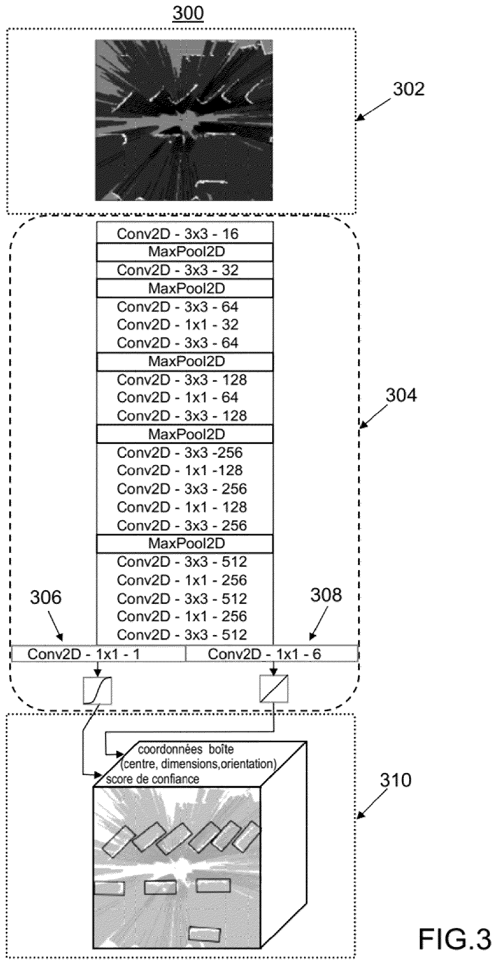

Les figures 3 à 5 illustrent différentes architectures adaptées à la mise en oeuvre du procédé de l'invention.

La figure 3 illustre un premier mode de réalisation du dispositif de détection d'objet matériel selon l'invention, dans lequel le réseau de neurones est basé sur une architecture de type YOLOv2. L'homme du métier en intelligence artificielle connait le modèle YOLOv2 (ou YOLO9000) comme un modèle de détection d'objets en temps réel à une seule étape, qui permet de détecter des objets via l'utilisation d'un réseau de neurones convolutionnel. L'article de J. Redmon and A. Farhadi, « YOLO9000 : Better, faster, stronger ». In 2017, IEEE Conférence on Computer Vision and Pattern Recognition (CVPR), pages 6517-6525. ISSN : 1063-6919 fournit une description plus précise de ce modèle.

Généralement, dans son utilisation courante de détection sur image, ce réseau de neurones prend en entrée une image et produit en sortie une matrice $8 \times 8$ qui représente une subdivision de l'image d'entrée. Chaque cellule de cette matrice contient un n-uplet (s, x, y, log w, log h) qui représente une boîte englobante, où x et y sont les coordonnées du centre de la boîte englobante dans la cellule, w et h sont ses dimensions et s est un score de confiance dans l'intervalle [0, 1] qui représente le niveau de confiance associé à cette détection. Un seuillage des 64 boîtes englobantes prédites selon leur score de confiance permet d'obtenir les détections d'objets sur l'image. En parallèle, une classe est prédite pour chaque cellule de sortie du détecteur pour catégoriser l'objet détecté. L'architecture utilisée est une succession de couches convolutionnelles dont le nombre de filtres augmente avec la profondeur de la couche. Ces couches sont entrecoupées de couches de sous-échantillonnage par valeur maximale (connu comme « max pooling » selon l'anglicisme consacré) diminuant les dimensions des tenseurs d'un facteur 2 à chaque passage. La fonction de coût utilisée est représentée par l'équation « L = Lclassification +Lregression » avec Lclassification représentant l'entropie croisée binaire sur le score de confiance s, et Lregression représentant le coût L1 lissé sur (x, y, log w, log h) pour les cellules contenant une boîte englobante vérité terrain.

Dans le cadre de l'invention, l'architecture du réseau de neurones 304 du détecteur 300 montré sur la figure 3, est basée sur celle d'un détecteur YOLOv2 pour matrice $8 \times 8$, mais le nombre de filtres de chaque couche convolutionnelle est divisé par deux (par rapport au détecteur original).

Cette organisation permet d'obtenir un réseau de neurones réduit contenant 4 961 463 paramètres entraînables, pour offrir un temps d'inférence faible.

Comme pour le détecteur YOLOv2, l'architecture du réseau de neurones de l'invention est une alternance de couches convolutionnelles qui extraient les caractéristiques de la grille d'occupation en entrée, et de couches de « max-pooling » qui sous-échantillonnent la largeur et la hauteur de la grille, jusqu'à atteindre une matrice de sortie de taille cible.

Ainsi dans l'exemple illustré, l'architecture du réseau de neurones 304 prend entrée une grille d'occupation de taille 256 × 256, et est constituée de cinq couches de sous-échantillonnage par valeur maximale (MaxPool2D), et d'une pluralité de couches convolutionnelles (Conv2D) dont les dimensions de leur noyau de convolution (KxK = 1x1 ou 3x3) et le nombre de filtres (F = 16 ou 32 ou 64 ou 128 ou 256 ou 512) spécifiques à chaque couche. Ces couches sont suivies d'une fonction d'activation « ReLU » classique en apprentissage profond.

Deux couches convolutionnelles (306, 308) utilisent toutes les deux la même entrée qui est la sortie de la couche convolutionnelle directement au-dessus.

Une première couche convolutionnelle 306 (Conv2D - 1x1 - 1) de noyau (KxK=1x1) ne contient qu'un seul filtre (F = 1), qui après passage dans une fonction d'activation sigmoïde représente le score de confiance de chaque cellule de la matrice sortie.

Une autre couche convolutionnelle 308 (Conv2D - 1x1 - 6) de noyau (KxK=1x1) contient 6 filtres (F=6) afin de représenter les coordonnées et l'orientation de la boite englobante de chaque cellule sous la forme d'un n-uplet (x, y, log w, log h, cos θ, sin θ).

Ainsi, en opération, le réseau de neurones 304 prend en entrée les données d'une grille d'occupation 302, et fournit en sortie une matrice de sortie dont chaque cellule correspond à une portion de l'espace environnant le véhicule autonome et qui contient un score de confiance permettant de quantifier la probabilité de la présence de l'objet matériel prédéfini ainsi que les coordonnées d'une boite englobante orientée qui délimite les contours de l'objet matériel prédéfini.

Pour l'exemple illustré de la figure 3, la matrice de sortie produite est de taille 8 × 8, chaque cellule couvrant une portion de l'espace environnant égale à un carré de 3,2 mètres × 3,2 mètres.

Comme indiqué, chaque cellule de la matrice de sortie, contient 7 canaux (i.e. provenant du filtre pour le score de confiance et des six filtres pour les coordonnées de la boite englobante) représentés par un n-uplet (s, x, y, log w, log h, cos θ, sin θ) où :

- s ∈ [0, 1] est un score de confiance utilisé pour classer les détections comme positives ou négatives avec un seuil choisi ;

- x et y représentent le décalage du centre d'une boîte englobante par rapport au coin supérieur gauche de la cellule de prédiction ;

- log w et log h représentent le logarithme des dimensions de la cellule prédite ; et

- cos θ et sin θ représentent le cosinus et le sinus du cap de la boîte englobante.

Durant la phase d'apprentissage la différence entre les matrices de sortie produites par le réseau de neurones et les matrices de sortie vérité terrain est quantifiée à l'aide de la fonction de coût. Ces vérités terrain des matrices de sortie sont créées à partir des annotations de boîte englobante présentes dans le jeu de données en fixant le uplet aux valeurs (1, x, y, log w, log h, cos θ, sin θ) pour chaque cellule de sortie qui contient un centre d'une boîte englobante prédite et pour les autres cellules en fixant toutes les valeurs du uplet à zéro (0, 0, 0, 0, 0, 0, 0, 0).

L'opération de détection étant limitée à un seul type d'objet matériel, qui est prédéfini, il n'est pas nécessaire de prédire une classe par cellule de sortie. Aussi la sortie du réseau de neurones est adaptée et ne contient pas de circuit de prédiction de classes.

De plus, contrairement à des objets génériques observables sur des images, les objets matériels à détecter dans le contexte de l'invention, ont une orientation bien définie qu'il est utile de prédire. Il est ajouté deux filtres de sortie (cos θ, sin θ) à la dernière couche convolutionnelle 308 du réseau de neurones. Ces filtres prédisent pour chaque objet matériel prédéfini qui est détecté, un cosinus (cos θ) et un sinus (sin θ) dont un angle d'orientation θ à valeurs dans l'intervalle [-π, π] va être extrait par une fonction atan2 (fonction arc tangente à deux arguments), permettant ainsi d'orienter la boite englobante prédite correspondante.

La perte utilisée (i.e. la fonction de coût) est donnée par l'équation :

$$L = L_{classification} + L_{régression}$$

avec 'Lclassification' représentant la perte par entropie croisée binaire sur les scores de confiance s, et avec 'Lrégression' représentant la perte L1 lisse sur les paramètres de régression (x, y, log w, log h, cos θ, sin θ) pour les cellules contenant le centre d'une boîte englobante sur la matrice de sortie vérité terrain.

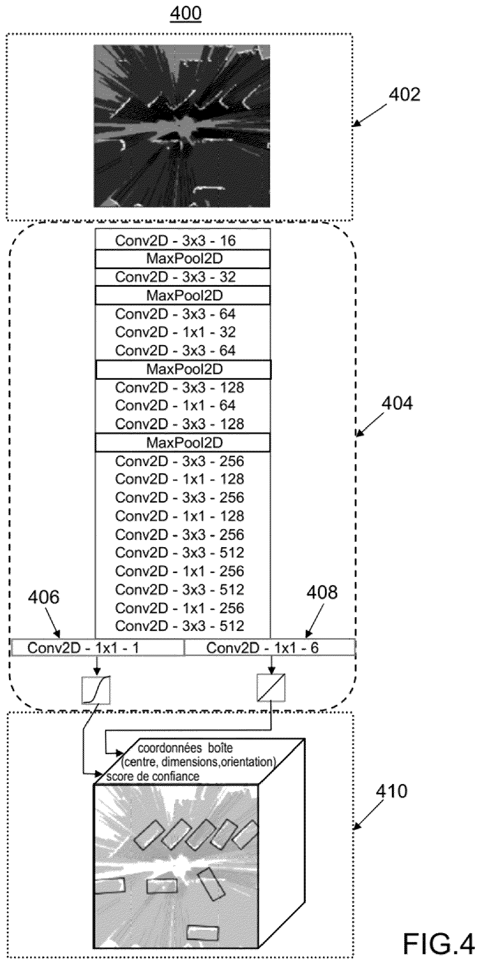

La figure 4 illustre un deuxième mode de réalisation 400 du dispositif de détection d'objet matériel selon l'invention, dans lequel le réseau de neurones 404 basé sur une architecture de type YOLOv2, reçoit en entrée les données d'une grille d'occupation 402, et produit en sortie 410 une matrice de sortie de taille 16 x16.

La subdivision telle qu'illustrée pour le premier mode de réalisation, force le détecteur à ne proposer au maximum qu'une seule boîte englobante par cellule. Pour des grilles d'occupations couvrant une surface de 25,6 mètres de côté, l'implémentation avec une subdivision 8x8 selon le premier mode de réalisation, ne donne au maximum qu'un véhicule détecté par zone de 3,2 mètres de côté. Aussi, ceci peut conduire à ne pas détecter certains véhicules (ou objet matériel prédéfini) qui seraient trop rapprochés les uns des autres.

Pour prévenir l'absence de détection de véhicules rapprochés, par exemple dans des contextes de trafic dense, le détecteur est modifié pour produire une matrice de sortie de taille 16 × 16.

Le détecteur est implémenté comme pour le premier mode de réalisation comme une alternance de couches convolutionnelles d'extraction de caractéristiques et de couches de « max-pooling », mais la dernière couche de max-pooling est supprimée afin d'obtenir une matrice de sortie de taille 16 × 16. Cette modification permet alors de détecter au maximum un véhicule par zone de 1,6 mètre par 1,6 mètre, réduisant ainsi le risque d'une non-détection de véhicules rapprochés. Le détecteur ainsi obtenu contient 4 961 463 paramètres entraînables.

Chaque cellule présente dans la matrice de sortie de taille 16 × 16, contient les mêmes 7 canaux (s, x, y, log w, log h, cos θ, sin θ) que chaque cellule de la matrice de sortie de taille 8 × 8 du premier mode de réalisation.

La perte utilisée est la même combinaison d'entropie croisée binaire et de fonctions de perte L1 lissée que pour le premier mode de réalisation.

De manière similaire au premier mode de réalisation, deux couches convolutionnelles (406, 408) traitent les caractéristiques en scores de confiance et en paramètres de régression, en utilisant une fonction d'activation sigmoïde pour la première couche 406 et une fonction d'activation linéaire pour la deuxième couche 408.

Toujours de manière similaire au premier mode de réalisation, il est ajouté deux filtres de sortie (cos θ, sin θ) à la dernière couche convolutionnelle 408 du réseau de neurones. Ces filtres prédisent, pour un objet matériel détecté, un cosinus (cos θ) et un sinus (sin θ) à partir desquels un angle d'orientation θ à valeurs dans l'intervalle [-π, π] va être extrait par une fonction atan2 (fonction arc tangente à deux arguments), et permettant ainsi d'orienter la boite englobante correspondante.

Dans une variante complémentaire au second mode de réalisation, une étape optionnelle de post-traitement de suppression non maximale NMS (« Non-Maximum Suppression » selon l'anglicisme consacré), est réalisée sur la matrice de sortie afin de supprimer les doublons.

En effet, le passage à une matrice de détection en sortie de taille 16 × 16 permet la détection de plus de véhicules, mais cela peut introduire des doublons dans la détection, c'est-à-dire avoir plusieurs boîtes englobantes prédites pour le même véhicule.

L'étape de post-traitement NMS permet de fusionner toutes les détections qui relèvent d'un même objet.

Dans une variante de réalisation non illustrée, l'architecture du détecteur est basée sur une architecture YOLOv3, et produit une matrice de sortie de taille 8 × 8 avec des boites englobantes orientées.

Chaque cellule présente dans la matrice 8 × 8 contient les mêmes 7 canaux (s, x, y, log w, log h, cos θ, sin θ). L'architecture est aussi une alternance de blocs de couches convolutionnelles d'extraction de caractéristiques et de couches de sous-échantillonnage des caractéristiques pour aller vers la matrice de sortie 8 × 8. La principale différence avec le premier mode de réalisation, réside dans l'architecture interne d'extraction des caractéristiques des grilles d'occupation.

Les blocs d'extraction de caractéristiques sont composés de couches de convolution avec des connexions à saut pour aider l'apprentissage du réseau. Une connexion à saut est une couche convolutionnelle qui va utiliser la sortie d'une couche antérieure en plus de celle de la couche immédiatement précédente. Un réseau comportant des connexions à saut se représente comme un graphe de calcul avec embranchements.

Les couches de sous-échantillonnage utilisées sont ici des couches convolutionnelles avec un pas de 2 à la différence du premier mode de réalisation qui utilise des couches de sous-échantillonnage par valeur maximale.

La perte utilisée est la même combinaison d'entropie croisée binaire et de perte L1 lisse que celle du premier mode de réalisation. Cette architecture contient 10 158 679 paramètres entraînables.

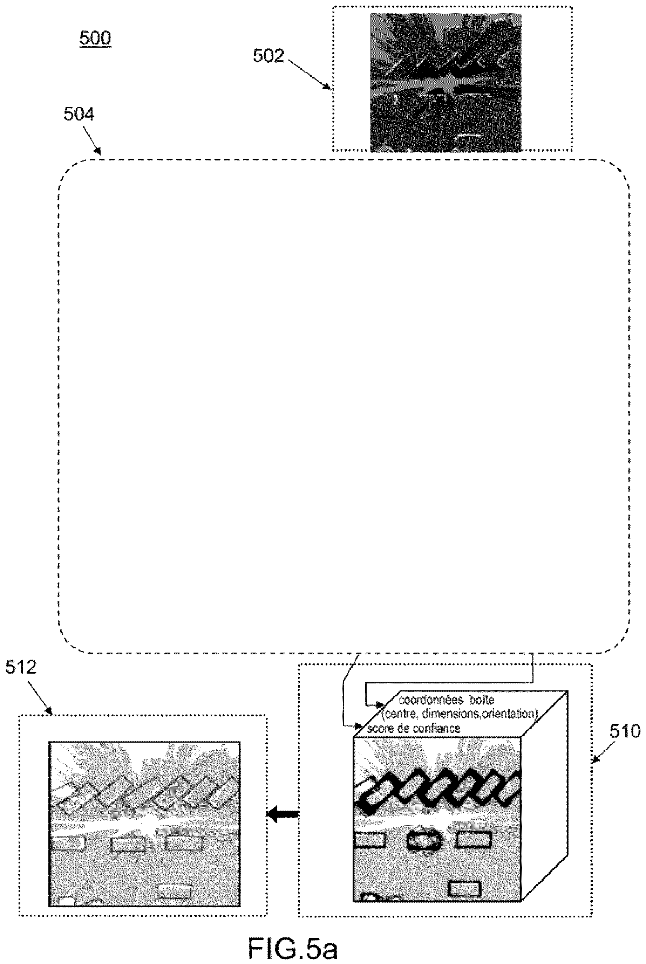

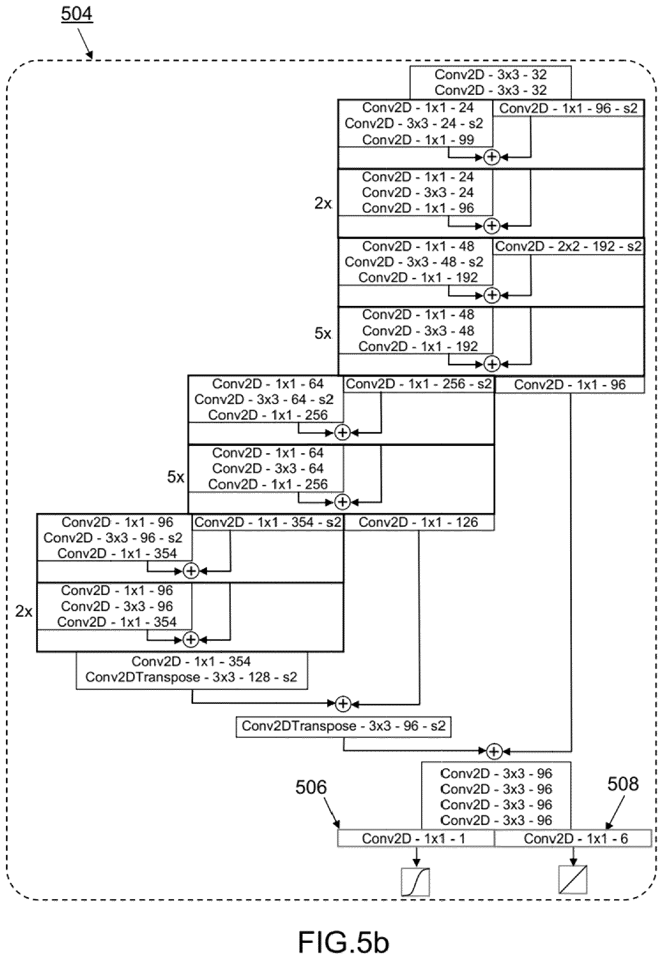

La figure 5a illustre un troisième mode de réalisation 500 du dispositif de détection d'objet matériel selon l'invention, et la figure 5b détaille une implémentation du réseau de neurones utilisé.

Dans ce mode de réalisation, le détecteur est basé sur une architecture d'un réseau neuronal profond à une seule étape, appelé PIXOR, qui permet de détecter des véhicules sur des nuages de points LiDAR. Ce réseau PIXOR produit directement des estimations de paramètres (par exemple, la taille, l'emplacement et l'orientation) d'une boîte englobante pour un objet 3D orienté.

Pour plus de détails sur l'architecture PIXOR, l'homme du métier peut se reporter à l'article de Yang et al, "PIXOR : Real-time 3D Object Détection from Point Clouds", arXiv : 1902.06326.

Une représentation PIXOR d'un nuage de points est une représentation d'image en vue à vol d'oiseau BEV (« Birds Eye View » selon l'anglicisme consacré) qui utilise des valeurs d'occupation pour indiquer la présence ou l'absence d'un point correspondant dans le nuage de points et, pour les nuages de points 3D, utilise des valeurs de hauteur pour représenter complètement les points du nuage de points (de manière similaire au canal de profondeur d'une image RGBD).

L'image BEV est codée sous forme de tenseur d'entrée, comportant un canal d'occupation qui code une carte d'occupation (généralement binaire) et, pour un nuage de points 3D, un canal de hauteur qui code la hauteur de chaque pixel occupé.

Etant donné qu'un réseau PIXOR produit directement des boites englobantes orientées, il n'est alors pas nécessaire pour cette variante de réalisation d'ajouter les filtres supplémentaires des autres modes de réalisation pour calculer un angle de cap.

Pour chaque grille d'occupation fournie en entrée 502 du réseau de neurones 504 comme une matrice de taille 256 × 256, le détecteur fournit une matrice de sortie 510 de taille 64 × 64 où chaque cellule contient 7 canaux représentés par un n-uplet (s, cos θ, sin θ, dx, dy, log w, log l) où :

- s ∈ [0, 1] est un score de confiance utilisé pour classer les détections comme positives ou négatives avec un seuil choisi ;

- dx et dy représentent la distance en x et y du coin supérieur gauche de la cellule de prédiction au centre du véhicule prédit ;

- log w et log l représentent le logarithme des dimensions de la cellule de prédiction ; et

- cos θ et sin θ sont le cosinus et le sinus de l'angle de cap de la boîte englobante.

Les matrices de sortie vérité terrain sont créées à partir des annotations présentes dans le jeu de données en fixant pour chaque cellule de sortie confinée dans une boîte englobante, les valeurs des uplets correspondant à (1, cos θ, sin θ, dx, dy, log w, log l) et en fixant à zéro (0, 0, 0, 0, 0, 0, 0) les valeurs des autres uplets pour toutes les autres cellules.

Une étape additionnelle et optionnelle 512 de suppression non maximale peut être appliquée aux boîtes englobantes positives (i.e. celles dont le score de confiance est supérieur au seuil prédéfini choisi) en post-traitement pour éliminer les détections multiples.

Dans ce mode de réalisation, et selon l'architecture PIXOR, le réseau neuronal calcule trois niveaux de granularité de caractéristiques qui sont combinées en un seul niveau comme pour un réseau neuronal U-Net. Les caractéristiques sont extraites à l'aide de blocs résiduels contenant des couches convolutionnelles de profondeur croissante.

La perte utilisée est la même que celle utilisée par les autres modes de réalisation selon l'architecture YOLOv2 ou YOLOv3, c'est-à-dire par une combinaison de la fonction de perte d'entropie croisée binaire pour la classification et de la fonction de perte L1 lisse pour la régression.

Cette architecture contient 2 132 091 paramètres entraînables.

Différents modes de réalisation ont été décrits pour lesquels des variantes peuvent être envisagées.

Le procédé de l'invention peut ainsi être appliqué à différentes architectures autres que celles décrites dans les exemples détaillés.

L'homme du métier pourra adapter l'implémentation en conservant les spécificités de l'invention quant aux entrées et aux sorties du réseau de neurones utilisé, entrées qui doivent être une grille d'occupation générique (i.e. indépendante du type de capteur et ne contenant pas d'informations spécifiques au capteur), et sorties qui sont une subdivision régulière de la grille d'occupation d'entrée. La grille d'occupation a les caractéristiques que chaque région contient les 7 coordonnées de classification et de régression (i.e. les 7 canaux du n-uplet (s, cos θ, sin θ, dx, dy, log w, log l)).

Avantageusement, la détection de classes d'objets autres que des véhicules pourrait être implémentée via l'ajout de couches de sortie du réseau de neurones prédisant un score de confiance quant à la classe d'objet auquel la détection appartient. Ces couches de sortie seraient suivies d'une fonction "softmax" (fonction exponentielle normalisée) permettant de normaliser les scores de confiance dans l'intervalle [0, 1].

Une variante pourrait porter sur l'utilisation de grilles d'occupation temporellement contiguës afin d'améliorer les résultats du détecteur de véhicules. Une manière de procéder consisterait à empiler ces grilles d'occupation successives dans l'entrée du modèle de détection. Cette modification permettrait au détecteur d'utiliser ces données riches sans qu'une modification d'architecture soit nécessaire, mais il serait en revanche nécessaire de ré-entraîner le réseau de neurones.

Dans un mode de réalisation, le dispositif de l'invention comprend ou est couplé à une interface homme-machine pour afficher une représentation de la matrice de sortie obtenue selon le procédé de l'invention.

**Revendications**

1. Procédé (200) de détection d'objets matériels dans un espace environnant un robot autonome, le procédé étant mis en oeuvre par ordinateur et comprenant au moins des étapes de :

recevoir (202) des données relatives à l'environnement dudit robot autonome, lesdites données étant représentatives de probabilités d'occupation de chaque cellule d'au moins une grille d'occupation, une grille d'occupation fournissant une représentation spatiale discrétisée de l'environnement autour dudit robot autonome ;

exécuter (204) un algorithme d'intelligence artificielle sur les données reçues pour générer une matrice de sortie dont chaque cellule contient un score de confiance et des paramètres définissant une boite englobante orientée, ledit algorithme d'intelligence artificielle mettant en oeuvre un réseau de neurones convolutif de type mono-étape, entrainé lors d'une phase d'apprentissage supervisé pour produire, à partir de données de grille d'occupation, un score de confiance indiquant la probabilité qu'une région contienne un objet prédéfini ainsi que des coordonnées d'une boîte englobante pour ledit objet prédéfini ; et

extraire (206) parmi les cellules de la matrice de sortie, les cellules dont le score de confiance est supérieur à un seuil prédéfini.

2. Le procédé selon la revendication 1 dans lequel l'étape de réception de données d'environnement comprend une étape consistant à recevoir des données issues d'au moins un capteur de distance embarqué sur ledit robot autonome, et une étape consistant à transformer les données capteur en données représentatives de probabilités d'occupation d'une grille d'occupation.

3. Le procédé selon la revendication 2 comprenant de plus avant l'étape de transformation, une étape consistant à fusionner les données reçues de plusieurs capteurs de distance embarqués.

4. Le procédé selon l'une quelconque des revendications 1 à 3 dans lequel l'étape de détermination des régions comprenant un objet matériel prédéfini, comprend de plus une étape consistant à calculer un angle d'orientation pour la boite englobante orientée.

5. Le procédé selon l'une quelconque des revendications 1 à 4 comprenant de plus une étape consistant à déterminer qu'un même objet matériel prédéfini est détecté plusieurs fois, et une étape consistant à ne conserver qu'une seule occurrence de détection.

6. Programme d'ordinateur comportant des instructions de code pour l'exécution des étapes du procédé selon l'une quelconque des revendications 1 à 5, lorsque ledit programme est exécuté par un processeur.

7. Un dispositif de détection d'objets matériels dans un espace environnant un robot autonome, comprenant des moyens pour mettre en oeuvre les étapes du procédé selon l'une quelconque des revendications 1 à 5.

8. Le dispositif selon la revendication 7 dans lequel les moyens pour exécuter un algorithme d'intelligence artificielle comprennent des moyens pour mettre en oeuvre un réseau de neurones composé d'une alternance de couches convolutionnelles pour l'extraction de caractéristiques et de couches de sous-échantillonnage, ledit réseau de neurones comprenant de plus deux filtres de sortie sur la dernière couche convolutionnelle configurés pour produire un angle d'orientation des boites englobantes.

9. Le dispositif selon la revendication 8 dans lequel le réseau de neurones est basé sur une architecture YOLOv2 ou YOLOv3.

10. Le dispositif selon la revendication 7 ou 8 dans lequel la grille d'occupation d'entrée du réseau de neurones est une matrice de taille $256 \times 256$ et dans lequel le réseau de neurones est configuré pour produire une matrice de sortie de taille $8 \times 8$ ou une matrice de sortie de taille $16 \times 16$.

11. Le dispositif selon la revendication 10 dans lequel chaque cellule de la matrice de sortie contient un n-uplet composé d'éléments représentatifs d'un score de confiance et de caractéristiques d'une boite englobante, dont des éléments permettant de calculer l'orientation de ladite boite englobante.

12. Le dispositif selon la revendication 7 dans lequel, les moyens pour exécuter un algorithme d'intelligence artificielle comprennent des moyens pour mettre en oeuvre un réseau de neurones basé sur une architecture PIXOR.

13. Le dispositif selon la revendication 12 dans lequel la grille d'occupation fournie en entrée du réseau de neurones est une matrice de taille $256 \times 256$ et la matrice de sortie est une matrice de taille $64 \times 64$ dont chaque cellule contient un n-uplet composé d'éléments représentatifs d'un score de confiance et de caractéristiques d'une boite englobante orientée.

14. Le dispositif selon l'une quelconque des revendications 7 à 13 comprenant de plus une interface homme-machine pour afficher une représentation de la matrice de sortie obtenue selon le procédé de l'une quelconque des revendications 1 à 5.

15. Un véhicule autonome embarquant un système d'assistance à la conduite comprenant un dispositif pour la détection de véhicules selon l'une quelconque des revendications 7 à 14.

16. Procédé selon l'une quelconque des revendications 1 à 5 comprenant une étape préliminaire de création d'une base de données d'apprentissage pour entrainer ledit réseau de neurones, l'étape préliminaire consistant à :

recevoir sous la forme d'un nuage de points 3D, des données représentatives d'un environnement autour d'un robot autonome ;
annoter le nuage de points 3D pour identifier des objets matériels prédéfinis ;
générer une représentation spatiale discrétisée 2D du nuage de points 3D annoté, ladite représentation spatiale discrétisée 2D étant une matrice dont les cellules contiennent des probabilités d'occupation ; et

stocker ladite représentation spatiale discrétisée 2D comme une donnée d'apprentissage.

FIG.1

200

202
Réception d'une grille d'occupation

204
Génération d'une matrice de sortie

206
Extraction de boites englobantes orientées

FIG. 2

<u>300</u>

302

304

306

308

| Conv2D - 3x3 - 16 |
| MaxPool2D |
| Conv2D - 3x3 - 32 |
| MaxPool2D |
| Conv2D - 3x3 - 64 |
| Conv2D - 1x1 - 32 |
| Conv2D - 3x3 - 64 |
| MaxPool2D |
| Conv2D - 3x3 - 128 |
| Conv2D - 1x1 - 64 |
| Conv2D - 3x3 - 128 |
| MaxPool2D |
| Conv2D - 3x3 -256 |
| Conv2D - 1x1 -128 |
| Conv2D - 3x3 - 256 |
| Conv2D - 1x1 - 128 |
| Conv2D - 3x3 - 256 |
| MaxPool2D |
| Conv2D - 3x3 - 512 |
| Conv2D - 1x1 - 256 |
| Conv2D - 3x3 - 512 |
| Conv2D - 1x1 - 256 |
| Conv2D - 3x3 - 512 |

| Conv2D - 1x1 - 1 | Conv2D - 1x1 - 6 |

coordonnées boîte
(centre, dimensions, orientation)
score de confiance

310

FIG.3

<u>400</u>

FIG.4

500

502

504

512

510

coordonnées boîte
(centre, dimensions,orientation)
score de confiance

FIG.5a

FIG.5b

Europäisches
Patentamt

European
Patent Office

Office européen
des brevets

# RAPPORT DE RECHERCHE EUROPEENNE

Numéro de la demande

EP 23 18 2253

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WIRGES SASCHA ET AL: "Single-Stage Object Detection from Top-View Grid Maps on Custom Sensor Setups", 2020 IEEE INTELLIGENT VEHICLES SYMPOSIUM (IV), IEEE, 19 octobre 2020 (2020-10-19), pages 939-944, XP033872719, DOI: 10.1109/IV47402.2020.9304759 | 1-8, 10-16 | INV. G06V20/58 G06V10/82 G06N3/04 B60W60/00 G06N3/045 G06N3/08 |
| A | * abrégé * <br> * figure 2 * <br> * section III * <br> * section IV * <br> ----- | 9 | |
| A | EP 3 968 219 A1 (COMMISSARIAT ENERGIE ATOMIQUE [FR]) 16 mars 2022 (2022-03-16) * le document en entier * ----- | 1-16 | |

DOMAINES TECHNIQUES RECHERCHES (IPC)

G06V
G06N
B60W

Le présent rapport a été établi pour toutes les revendications

| Lieu de la recherche | Date d'achèvement de la recherche | Examinateur |
|---|---|---|
| La Haye | 16 janvier 2024 | Martinez, Francis |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

**EP 23 18 2253**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**16-01-2024**

| Document brevet cité au rapport de recherche | Date de publication | Membre(s) de la famille de brevet(s) | Date de publication |
|---|---|---|---|
| EP 3968219 A1 | 16-03-2022 | EP 3968219 A1 | 16-03-2022 |
| | | FR 3114174 A1 | 18-03-2022 |
| | | US 2022083077 A1 | 17-03-2022 |

EPO FORM P0460

## RÉFÉRENCES CITÉES DANS LA DESCRIPTION

**Littérature non-brevet citée dans la description**

- **H. MORAVEC ; A. ELFES.** High résolution maps from wide angle sonar. *1985 IEEE International Conférence on Robotics and Automation Proceedings,* Mars 1985, vol. 2, 116-121
- **SASCHA WIRGES ; TOM FISCHER ; CHRISTOPH STILLER ; JESUS BALADO FRIAS.** Object détection and classification in occupancy grid maps using deep convolutional networks. *2018 21st International Conférence on Intelligent Transportation Systems (ITSC),* ISSN 2153-0017, 3530-3535
- Complex-YOLO: ''An euler-region-proposal for real-time 3d object détection on point clouds. **MARTIN SIMON ; STEFAN MILZ ; KARL AMENDE ; HORST-MICHAEL GROSS.** Computer Vision - ECCV 2018 Workshops, Lecture Notes in Computer Science. Springer International Publishing, 197-209
- **STEFAN HOERMANN ; PHILIPP HENZLER ; MARTIN BACH ; KLAUS DIETMAYER.** Object détection on dynamic occupancy grid maps using deep learning and automatic label génération. *IEEE Intelligent Vehicles Symposium (IV),* 2018, ISSN 1931-0587, 826-833
- **J. REDMON ; A. FARHADI.** YOLO9000 : Better, faster, stronger. *IEEE Conférence on Computer Vision and Pattern Recognition (CVPR),* 2017, ISSN 1063-6919, 6517-6525
- **YANG et al.** PIXOR : Real-time 3D Object Détection from Point Clouds. *arXiv : 1902.06326*